(19) Europäisches Patentamt
European Patent Office
Office européen des brevets

(11) **EP 4 464 438 A1**

(12) # EUROPEAN PATENT APPLICATION
published in accordance with Art. 153(4) EPC

(43) Date of publication:
**20.11.2024   Bulletin 2024/47**

(21) Application number: **23740293.8**

(22) Date of filing: **12.01.2023**

(51) International Patent Classification (IPC):
*B22F 1/00* (2022.01)        *B22F 1/052* (2022.01)
*B22F 1/102* (2022.01)       *B22F 10/34* (2021.01)
*B33Y 70/00* (2020.01)       *B33Y 80/00* (2015.01)
*C22C 21/00* (2006.01)

(52) Cooperative Patent Classification (CPC):
**B22F 1/00; B22F 1/052; B22F 1/102; B22F 10/34;
B33Y 70/00; B33Y 80/00; C22C 21/00;** Y02P 10/25

(86) International application number:
**PCT/JP2023/000589**

(87) International publication number:
**WO 2023/136285 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2022   JP 2022004512**

(71) Applicant: **Mitsubishi Materials Corporation
Tokyo 100-8117 (JP)**

(72) Inventors:
• **OHMORI Shinichi**
  **Saitama-shi, Saitama 330-8508 (JP)**
• **SANO Yosuke**
  **Saitama-shi, Saitama 330-8508 (JP)**
• **KATO Jun**
  **Saitama-shi, Saitama 330-8508 (JP)**
• **KOBAYASHI Keigo**
  **Saitama-shi, Saitama 330-8508 (JP)**

(74) Representative: **Hoffmann Eitle
Patent- und Rechtsanwälte PartmbB
Arabellastraße 30
81925 München (DE)**

(54) **ALUMINUM POWDER PRODUCT, METHOD FOR PRODUCING SAME, AND LAMINATION MOLDED ARTICLE**

(57)     This aluminum powder product (1) has powder particle bodies (2) made of aluminum or an aluminum alloy, and barrier layers (3) formed on surfaces of the powder particle bodies (2). An oxygen content in the aluminum powder product (1) is 0.5 mass% or less, and in a case where a test, in which a mixture obtained by mixing the aluminum powder product (1) and pure water at a mass ratio of 1:100 is held at 80°C for 12 hours, is performed, no aluminum hydroxide phase is formed on a surface of the aluminum powder product (1) after the test.

FIG. 1

EP 4 464 438 A1

**Description**

TECHNICAL FIELD

The present invention relates to an aluminum powder product, a method for producing the aluminum powder product, and an additive manufactured article.

Priority is claimed on Japanese Patent Application No. 2022-004512, filed January 14, 2022, the content of which is incorporated herein by reference.

BACKGROUND ART

Aluminum members have been widely used as materials for a heat sink due to their characteristics such as light weight and high thermal conduction properties. However, there is a need to design and produce pins and fins having complicated shapes enabling more efficient heat exchange in order to further improve heat dissipation characteristics.

Meanwhile, a powder metallurgy method can impart a shape at low cost since near net shaping using a mold is possible. However, in the application of the above method to aluminum, a problem has arisen in that sintering is not easily performed due to an oxide film.

Therefore, methods for improving sinterability, such as a preform obtained by pressure molding as described in Patent Document 1, the densification in a molding step before sintering by metal injection molding as described in Patent Document 2, and the application of a fine powder of several micrometers with desired sinterability as described in Patent Document 3, have been disclosed.

In recent years, as one of additive manufacturing techniques using metal powders, a binder jet method has attracted attention.

In this method, a binder containing a thermosetting resin, a thermoplastic resin or a photo-curing resin is selectively sprayed from a print head to a metal powder layer, and lamination of the metal powder layer solidified with the binder is repeatedly carried out to obtain a metal powder object in which the metal powder is solidified into a desired three-dimensional shape. Thereafter, a three-dimensional metal molded article is obtained through a binder solidification step, an unnecessary powder removing step, a degreasing step, and a sintering step.

The binder jet method has merits such as high accuracy, high productivity, and high recyclability of the feedstock powder. For example, Patent Document 4 discloses metal additive manufacturing using a binder jet method or an additive manufacturing device therefor.

CITATION LIST

Patent Documents

[Patent Document 1]
Japanese Unexamined Patent Application, First Publication No. H01-294833
[Patent Document 2]
Published Japanese Translation No. 2013-524006 of the PCT International Publication
[Patent Document 3]
Japanese Unexamined Patent Application, First Publication No. 2004-308004
[Patent Document 4]
Published Japanese Translation No. 2020-511593 of the PCT International Publication

SUMMARY OF INVENTION

TECHNICAL PROBLEM

In the above-described binder jet method, it is difficult to apply a high pressure that accompanies plastic deformation during powder lamination. Therefore, it is difficult to apply a sintering method used for die molding or metal injection molding of the related art as is. In addition, since the powder lamination is repeatedly performed, the feedstock powder is required to have stable flowability and filling properties. Therefore, it is also difficult to apply a fine powder that is likely to aggregate or scatter.

In order to achieve both sinterability and flowability, removing an oxide film, that is a factor degrading the sinterability of an aluminum powder, or suppressing the growth of the oxide film is considered to be effective. Meanwhile, the aluminum powder easily reacts with water and forms aluminum hydroxide, and the aluminum hydroxide forms an oxide film (aluminum oxide) through thermal decomposition at about 300°C.

However, for example, as described in Patent Document 4, the ink used in the binder jet method often contains water. The water reacts with the aluminum powder during an additive manufacturing step or subsequent resin curing, degreasing, or heating for sintering, thereby forming aluminum hydroxide, and it is thus assumed that the aluminum hydroxide becomes a factor in the growth of an oxide film and inhibits the sinterability.

The present invention has been made in view of the above-described problems, and an object thereof is to provide an aluminum powder product with which a high-density aluminum sintered body can be produced, a method for producing the aluminum powder product, and an additive manufactured article.

SOLUTION TO PROBLEM

In view of the above-described backgrounds, the present inventors have conducted studies, and as a result, found that, by performing predetermined surface coating on an aluminum powder raw material, it is possible to suppress a reaction between an aluminum powder product and water, thereby resulting in minimizing the formation of aluminum hydroxide.

As a result of various examinations, the present invention provides the following aluminum powder product, method for producing the aluminum powder product, and an additive manufactured article.

[Aspect 1] An aluminum powder product according to Aspect 1 of the present invention is an aluminum powder product having powder particle bodies made of aluminum or an aluminum alloy, and barrier layers formed on surfaces of the powder particle bodies, in which an oxygen content in the aluminum powder product is 0.5 mass% or less, and in a case where a test, in which a mixture obtained by mixing the aluminum powder product and pure water at a mass ratio of 1:100 is held at 80°C for 12 hours, is performed, no aluminum hydroxide phase is formed on a surface of the aluminum powder product after the test.

According to the aluminum powder product according to the Aspect 1, since the aluminum powder product is a powder in which no aluminum hydroxide phase is formed on the surfaces of the powder particles after holding a mixture obtained by mixing the aluminum powder product and pure water at a mass ratio of 1:100 at 80°C for 12 hours, the aluminum powder product has sufficient corrosion resistance to water.

Therefore, it is possible to provide an aluminum powder suitable for metal additive manufacturing by a binder jet method using a binder containing moisture. That is, in a case where an additive manufactured article is formed by the binder jet method, it is possible to suppress the generation of aluminum hydroxide on the surfaces of the powder product particles in contact with the water of the binder. Therefore, even in a case where the aluminum powder product is sintered, it is possible to suppress the growth of oxide films on the powder product particles, and thus it is possible to obtain an additive manufactured article that is a sintered body having a high density.

In a case where aluminum hydroxide is formed on the surfaces of the powder product particles described above, it turns into aluminum oxide having a high melting point in a subsequent sintering step, and coats the surfaces of the powder product particles, and thus sinterability is deteriorated. In addition, the oxygen content in the aluminum powder product is reduced to 0.5 mass% or less, so that it is possible to suppress the influence of the oxide film generated on the surfaces of the powder product particles, and thus it is possible to maintain the original sinterability without further degradation.

The aluminum alloy may be an aluminum alloy in which Fe, Si, Cu, Mn, Zn, Mg, Cr, and Ti, that are metal elements, are contained in an amount of 10 mass% or less for each element and contained in a total amount of 12 mass%, for example. As the pure water, for example, ion exchange water or distilled water having an electric conductivity of 0.1 μS/cm or less can be used.

[Aspect 2] In an aluminum powder product of Aspect 2, in Aspect 1, a volume-based 50%-cumulative particle diameter measured by a laser diffraction/scattering method is 10 μm or more and 50 μm or less.

In the aluminum powder product of Aspect 2, since the particle diameter is as described above, it is possible to provide an aluminum powder having stable flowability and desired sinterability.

[Aspect 3] In an aluminum powder product of Aspect 3, in Aspect 1 or 2, Y = (D90 - D10)/D50, that is calculated from a volume-based 10%-cumulative particle diameter (D10), a volume-based 50%-cumulative particle diameter (D50), and a volume-based 90%-cumulative particle diameter (D90), measured by a laser diffraction/scattering method, is in a range of 0.5 < Y < 2.0.

In the aluminum powder product of Aspect 3, the value of Y = (D90 - D10)/D50 is set in a range of 0.5 < Y < 2.0, so that the bulk density can be stably kept at a high level in a case where a powder layer formed of the aluminum powder is formed. In a case where the value of Y is smaller than the above-described range, gaps between the powder particles increase, and it becomes difficult to obtain a high bulk density. In a case where the value of Y is larger than the above-described range, the sinterability of large powder particles becomes poor, which causes ununiformities in density in a molded article obtained by sintering.

[Aspect 4] In an aluminum powder product of Aspect 4, in any one of Aspects 1 to 3, the barrier layer is formed of a volatile antirust agent consisting of one of amine-based nitrites, amine-based carboxylates, amine-based chromates, carboxylic acid esters, and heterocyclic compounds or a mixture thereof. In this case, the barrier layer may be in a state in which an extremely small amount of the volatile antirust agent is attached to the surfaces of the powder particle bodies, or a state in which a part of the volatile antirust agent attached is bonded to the aluminum. The amount of the volatile antirust agent attached may be about 0.01 to 0.2 $g/m^2$, and more preferably about 0.05 to 0.1 $g/m^2$ with respect to the specific surface area of the aluminum powder product 1.

In the aluminum powder product of Aspect 4, since the volatile antirust agent consisting of one of these salts, esters, and heterocyclic compounds or a mixture thereof is attached, it is possible to suppress the influence of the oxide film generated on the surfaces of the powder particles and maintain the original sinterability without further degradation.

[Aspect 5] An aluminum powder product of Aspect 5 of the present invention is a powder for metal additive manufacturing.

Even in a case where the aluminum powder product of Aspect 5 is used in an additive manufacturing method such as a binder jet method using an aqueous binder, it is possible to suppress the influence of the oxide film generated on the surfaces of the powder particles and maintain the original sinterability without further degradation. Accordingly, the aluminum powder product is a powder that is excellent as a powder for metal additive manufacturing and is advantageous for producing an additive manufactured article having a high density.

[Aspect 6] A method for producing an aluminum powder product of Aspect 6 of the present invention is a method for producing an aluminum powder product including a step of immersing an aluminum powder raw material made of aluminum or an aluminum alloy in a solution obtained by dissolving a volatile antirust agent in water, an organic solvent, or a solvent obtained by mixing the water and the organic solvent, and a step of drying the aluminum powder after the immersion, in which in the aluminum powder product obtained by the drying step, an oxygen content in the aluminum powder product is 0.5 mass% or less, and in a case where a test, in which a mixture obtained by mixing the aluminum powder product and pure water at a mass ratio of 1:100 is held at 80°C for 12 hours, is performed, no aluminum hydroxide phase is formed on a surface of the aluminum powder product after the test. The phrase that no aluminum hydroxide phase is formed on a surface of the aluminum powder product after the test means, for example, that a main peak of the aluminum hydroxide phase is not confirmed by a powder X-ray diffraction test described below.

According to the method for producing an aluminum powder product of Aspect 6, the aluminum powder is immersed in a solution containing a volatile antirust agent and dried, so that it is possible to obtain an aluminum powder product in which no aluminum hydroxide phase is formed on the surfaces of the powder product particles even after the test including holding at 80°C for 12 hours.

This aluminum powder product has sufficient corrosion resistance to water. Therefore, it is possible to provide an aluminum powder product suitable for metal additive manufacturing by a binder jet method using a binder containing water.

[Aspect 7] In a method for producing an aluminum powder product of Aspect 7 of the present invention, in the producing method of Aspect 6, after a step of immersing the aluminum powder raw material in a liquid containing an acid or an alkali to remove an oxide film on surfaces of particles of the aluminum powder raw material, a step of immersing the aluminum powder raw material, from which the oxide film is removed, in the solution in which the volatile antirust agent is dissolved is performed.

According to the method for producing an aluminum powder product of Aspect 7, the amount of oxygen contained in the aluminum powder is easily set to 1.0 mass% or less, and more preferably 0.5 mass% or less by removing the oxide film on the surfaces of the particles of the aluminum powder raw material.

[Aspect 8] In a method for producing an aluminum powder product of Aspect 8 of the present invention, in the producing method of Aspect 6, in the step of immersing the aluminum powder raw material, from which the oxide film is removed, in the solution in which the volatile antirust agent is dissolved, removing the oxide film with an acid or an alkali is performed in the solution.

According to the method for producing an aluminum powder product of Aspect 8, removing the oxide film with an acid or an alkali and attaching the volatile antirust agent to the surface are performed in the same solution, so that it is possible to obtain a target aluminum powder product through the step of performing the immersion in one solution.

[Aspect 9] In a method for producing an aluminum powder product of Aspect 9 of the present invention, in any one of Aspects 6 to 8, the aluminum powder product is a powder for metal additive manufacturing.

[Aspect 10] An additive manufactured article of Aspect 10 of the present invention includes a sintered body of the aluminum powder product according to any one of Aspects 1 to 5.

Since the additive manufactured article of Aspect 10 is a sintered body of the aluminum powder product according to any one of Aspects 1 to 5, the sinterability after forming metal powder object is good, and a dense additive manufactured article can be provided. The phrase that the sinterability is good means that sintered articles record their densities of, for example, 85 mass% or more, and more preferably 90 mass% or more with respect to the theoretical density of aluminum powder raw material.

ADVANTAGEOUS EFFECTS OF INVENTION

According to the aluminum powder product according to the present invention, it is possible to promote sintering between particles of the aluminum powder product compared to aluminum powders of the related art. Therefore, in a case where an aluminum additive manufactured article is produced using the aluminum powder product, it is possible to increase the density of the aluminum additive manufactured article to be obtained and obtain high electrical conduction properties and high thermal conduction properties. Therefore, for example, it is possible to further improve the performance of heat exchange materials, conductive materials, and high-strength materials prepared by using the aluminum powder product.

BRIEF DESCRIPTION OF DRAWINGS

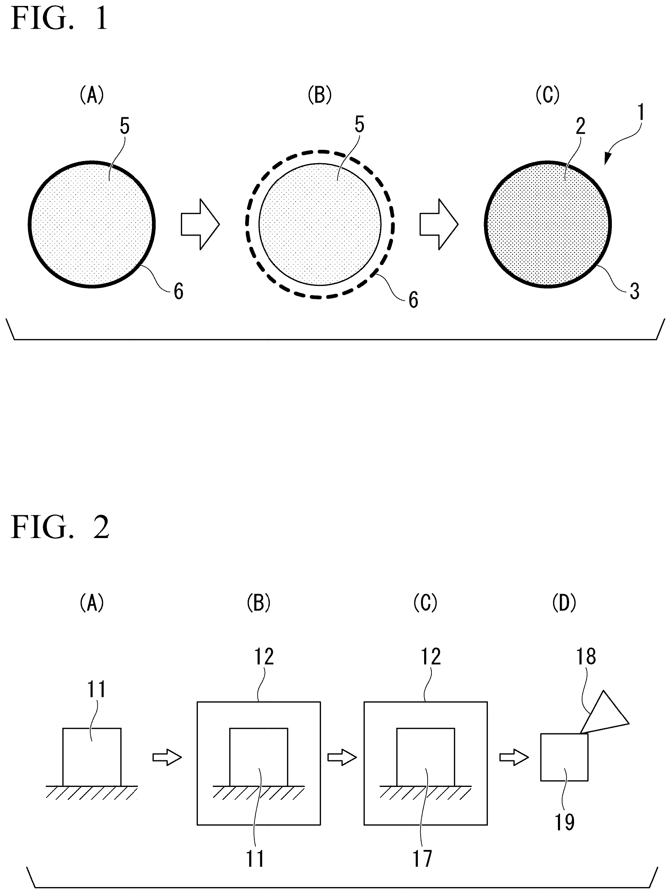

Fig. 1 shows a producing process of an aluminum powder product according to a first embodiment of the present invention. Fig. 1(A) is a cross-sectional view showing a particle of an aluminum powder raw material having an oxide film on its surface, Fig. 1(B) is a cross-sectional view showing a state in which the oxide film on the surface of the particle of the powder raw material is removed with a rust removing agent, and Fig. 1(C) is a cross-sectional view of a particle of an aluminum powder product having a barrier layer formed on the surface of the particle of the powder raw material with an antirust agent.
Fig. 2 shows an example of a sintering process using the aluminum powder product according to the first embodiment. Fig. 2(A) is an explanatory view showing an additively manufactured body of the aluminum powder products, Fig. 2(B) is an explanatory view showing a state in which the additively manufactured body is sintered in a heating furnace, Fig. 2(C) is an explanatory view showing an obtained sintered body, and Fig. 1(D) is an explanatory view showing a state in which the sintered body is subjected to final processing.
Fig. 3 is a graph showing an XRD measurement result of an aluminum powder product of Comparative Example 1 after holding in pure water at 80°C for 12 hours.
Fig. 4 is a graph showing an XRD measurement result of an aluminum powder product of Example 1 after holding in pure water at 80°C for 12 hours.
Fig. 5A is an enlarged image (50,000 X) of a particle surface of the aluminum powder product, showing the result of analysis on the particle surface of the aluminum powder product of Comparative Example 1 by Auger electron spectroscopy (AES).
Fig. 5B is an enlarged image (50,000 X) showing the distribution of carbon in the same image range as in Fig. 5A, showing the result of analysis on the particle surface of the aluminum powder product of Comparative Example 1 by Auger electron spectroscopy (AES).
Fig. 5C is an enlarged image (50,000 X) showing the distribution of phosphorus in the same image range as in Fig. 5A, showing the result of analysis on the particle surface of the aluminum powder product of Comparative Example 1 by Auger electron spectroscopy (AES).
Fig. 6A is an enlarged image (50,000 X) of a particle surface of the aluminum powder product, showing the result of analysis on the particle surface of the aluminum powder product of Example 1 by Auger electron spectroscopy (AES).
Fig. 6B is an enlarged image (50,000 X) showing the distribution of carbon in the same image range as in Fig. 6A, showing the result of analysis on the surface of the aluminum powder of Example 1 by Auger electron spectroscopy (AES).
Fig. 6C is an enlarged image (50,000 X) showing the distribution of phosphorus in the same image range as in Fig. 6A, showing the result of analysis on the surface of the aluminum powder of Example 1 by Auger electron spectroscopy (AES).

DESCRIPTION OF EMBODIMENTS

An aluminum powder product according to an embodiment of the present invention is an aluminum powder product having powder particle bodies made of aluminum or an aluminum alloy, and barrier layers formed on surfaces of the powder particle bodies, in which an oxygen content in the aluminum powder product is 0.5 mass% or less, and in a case where a test, in which a mixture obtained by mixing the aluminum powder product and pure water at a mass ratio of 1:100 is held at 80°C for 12 hours, is performed, no aluminum hydroxide phase is formed on a surface of the aluminum powder product after the test. Hereinafter, embodiments of the present invention will be described in detail, but the present invention is not limited to the following embodiments.
As shown in the cross-sectional structure of a particle in Fig. 1(c), an aluminum powder product 1 of the present embodiment is a powder consisting of a large number of particles having a powder particle body 2 made of pure aluminum or an aluminum alloy and a barrier layer 3 attached to an outer peripheral surface of the powder particle body 2.

More specifically, the aluminum powder product 1 is a powder consisting of particles in which, as will be described in detail in a producing method described below, oxide films 6 on surfaces of powder raw material particles 5 shown in Fig. 1(a) are removed with a rust removing agent as shown in Fig. 1(b), and then barrier layers 3 are formed on surfaces of powder particle bodies 2 with an antirust agent.

In a case where the aluminum powder raw material is made of an aluminum alloy, the elements contained in the aluminum alloy are not particularly limited, and any of generally known elements contained in an aluminum alloy may be contained.

Specifically, in the present invention, for example, A1000 series and A1050 series that are based on pure aluminum can be used as the aluminum powder raw material. In addition, aluminum alloys of any of composition series represented by A1100 series, A2000 series, A3000 series, A4000 series, A5000 series, A6000 series, A7000 series, and the like, that are aluminum alloy series, may be used. Furthermore, an aluminum alloy powder made of another general aluminum alloy to which an element not contained in the alloys of the series is added may be used.

The A1000 series includes pure aluminum having a purity of 99.0% or more, and may contain, as inevitable impurities, Fe, Si, and the like.

A1050 is pure aluminum having a purity of 99.5% or more, and may contain, as inevitable impurities, Fe, Si, and the like.

The A1100 series includes aluminum alloys having a purity of 99% or more, and for example, A1100 contains, as a composition, 1.0% or less of Fe and Si in total, Cu: about 0.05% to 0.20%, Mn: 0.05% or less, Zn: 0.1% or less, and a remainder of Al and inevitable impurities. Unless otherwise specified, the symbol % indicating the content of an element is "mass%". Unless otherwise specified, the remainder consists of Al and inevitable impurities.

The A2000 series includes aluminum alloys to which a large amount of Cu is added, and for example, A2024 is an aluminum alloy containing Si: 0.5% or less, Fe: 0.5% or less, Cu: 3.8% to 4.9%, Mn: 0.3% to 0.9%, Mg: 1.2% to 1.8%, Cr: 0.1% or less, and Zn: 0.25% or less.

The A3000 series includes aluminum alloys containing Mn as a constituent element, and for example, A3003 is an aluminum alloy containing Si: 0.6% or less, Fe: 0.7% or less, Cu: 0.05% or less, Mn: 1.0% to 1.5%, and Zn: 0.1% or less.

The A4000 series includes aluminum alloys to which Si is added, and for example, A4032 is an aluminum alloy containing Si: 11.0% to 13.5%, Fe: 1.0% or less, Cu: 0.5% to 1.3%, Mg: 0.8% to 1.3%, Cr: 0.10% or less, and Zn: 0.25% or less.

The A5000 series includes aluminum alloys to which Mg is added, and for example, A5052 is an aluminum alloy containing Si: 0.25% or less, Fe: 0.4% or less, Cu: 0.10% or less, Mn: 0.1% or less, Mg: 2.2% to 2.8%, Cr: 0.15% to 0.35%, and Zn: 0.1% or less.

The A6000 series includes aluminum alloys to which Mg and Si are added, and for example, A6061 is an aluminum alloy containing Si: 0.4% to 0.8%, Fe: 0.7% or less, Cu: 0.15% to 0.4%, Mn: 0.15% or less, Mg: 0.8% to 1.2%, Cr: 0.15% to 0.35%, Zn: 0.25% or less, and Ti: 0.15% or less.

The A7000 series includes aluminum alloys to which Zn and Mg are mainly added, and for example, A7075 is an aluminum alloy containing Si: 0.4% or less, Fe: 0.5% or less, Cu: 1.2% to 2.0%, Mn: 0.3% or less, Mg: 2.1% to 2.9%, Cr: 0.18% to 0.35%, Zn: 5.1% to 6.1%, and Ti: 0.2% or less.

[Volume-Based 50%-Cumulative Particle Diameter (D50)]

The aluminum powder product 1 preferably has a volume-based 50%-cumulative particle diameter of 10 $\mu$m or more and 50 $\mu$m or less in a powdery state consisting of a plurality of particles.

In a case where the aluminum powder product 1 has a volume-based 50%-cumulative particle diameter of 10 $\mu$m or more and 50 $\mu$m or less in a powdery state consisting of a plurality of particles , it is possible to obtain a particle-assembled powder (a powder as an assembly of particles) having stable flowability and desired sinterability. In a case where the powder particle diameter (D50) is 10 $\mu$m or less, there is a possibility of a dust explosion due to a decrease in flowability and scattering of the powder. In a case where the powder particle diameter (D50) is more than 50 $\mu$m, the specific surface area of the powder particles decreases. Therefore, the sinterability of the aluminum powder is degraded and it is difficult to reach a sufficient density of a sintered body. The powder particle diameter (D50) is more preferably 15 $\mu$m or more and 45 $\mu$m or less, and still more preferably 20 $\mu$m or more and 40 $\mu$m or less.

$$[0.5 < Y < 2.0 ]$$

Where $Y = (D90 - D10)/D50$]

In the aluminum powder product 1 in a powdery state consisting of a plurality of particles , the value of $Y = (D90 - D10)/D50$, that is calculated from a volume-based 10%-cumulative particle diameter (D10), a volume-based 50%-cumulative particle diameter (D50), and a volume-based 90%-cumulative particle diameter (D90), is preferably in a range of 0.5 < Y < 2.0.

In a case where Y = (D90 - D10)/D50 is in the range of 0.5 < Y < 2.0, the bulk density can be stably kept at a high level in the powder in which the particles of the aluminum powder product 1 are aggregated.

In a case where Y is 0.5 or less, the particle size distribution range is extremely narrow. Therefore, the powder has excellent stability, but gaps between particles increase and it becomes difficult to obtain a high bulk density.

In a case where Y is 2.0 or more, there is a merit in that small particles enter between large particles, and thus a high bulk density can be easily obtained. However, there is a concern that ununiformity may be caused in density in a molded article due to problems such as scattering of fine particles and low sinterability of large particles. Y is more preferably in a range of 0.6 < Y < 1.8, and still more preferably in a range of 0.8 < Y < 1.3.

[Oxygen Content]

The oxygen content of the entire powder of the aluminum powder product 1 is preferably 0.5 mass% or less. By reducing the oxygen content of the aluminum powder product 1 to 0.5 mass% or less, the oxide film generated on the surfaces of the powder particles becomes thinner, the influence of the oxide film on sintering is suppressed, and thus good sinterability can be obtained in a case where additive manufacturing is performed by a binder jet method described below. The oxygen content of the aluminum powder product 1 may be more preferably 0.3 mass% or less. However, in a case where the oxygen content is reduced to 0.05 mass% or less, the merit by the sinterability enhancement would be inadequate while the production cost increases.

[Barrier Layer 3]

The barrier layer 3 is a layer formed on the surface of the powder particle body 2 with an antirust agent after removal of the oxide film 6 on the surface of the powder raw material particle 5 with a rust removing agent. As shown in Fig. 1(c), the barrier layer 3 may be formed to cover the entire surface of the powder particle body 2, or may be formed to cover the majority of the surface of the powder particle body 2 but leave a part of the surface uncovered. The barrier layer 3 may be formed as a dense film or a porous film.

The presence of the barrier layer 3 can be confirmed by detecting the presence of a diffraction peak derived from an aluminum hydroxide phase by X-ray diffraction as described in detail in Examples to be described below. As the diffraction peak derived from the presence of the aluminum hydroxide in the X-ray analysis, a diffraction peak shown at diffraction angles $2\theta$ of 18.52°, 20.30°, 27.77°, 40.48°, and 53.02° can be used as a criterion for judgement of the presence.

[Method for Producing Aluminum Powder Product 1]

First, the powder raw material particles 5 shown in Fig. 1(a) are produced to produce the aluminum powder product 1.

For example, a powder producing method such as an atomization method can be applied to prepare the powder raw material particles 5. The atomization method is a technique for producing a powder in which a molten metal prepared to have a target composition is used and jetted at a high speed in an atmosphere such as an air, nitrogen gas, or vacuum atmosphere through a nozzle, and liquid droplets of the molten metal are rapidly cooled.

In a case where the aluminum powder product 1 is produced from a pure aluminum powder raw material, molten pure aluminum is used for producing the powder. In a case where the aluminum powder product 1 is produced from a powder raw material of an aluminum alloy, a molten aluminum alloy having a target composition is used for producing the powder.

As a method for producing the molten aluminum alloy having a target composition, for example, an aluminum alloy having a target composition ratio may be melted and used as a base material, or molten pure aluminum having a purity of 99% or more and a molten metal of one or more aluminum alloy base materials may be combined and mixed to obtain a molten alloy.

In a case where an aluminum powder raw material is prepared by spraying a molten metal in a controlled atmosphere, the powder obtained in general has a spherical shape or a shape similar to the spherical shape as shown in Fig. 1(a). In the present invention, the shape of the powder raw material particle 5 is not limited to a spherical shape, and the powder raw material particle 5 may have any shape other than the spherical shape. However, it is desirable that no secondary particles be present.

In a case where the powder raw material particles 5 are produced, an aluminum oxide film 6 is generated on the outer peripheral surfaces of the powder raw material particles 5. In producing the powder raw material particles 5 by performing the atomization method in a nitrogen gas atmosphere or a vacuum atmosphere, even in a case where the particle surfaces are not oxidized immediately after the production, the oxide film 6 is inevitably generated with the passage of time in a case where the particles are taken out from the atomization apparatus or the atmosphere gas for atomization and provided in the next step in the air.

[Rust Removing Agent]

The oxide film 6 is a factor inhibiting sintering during the sintering described later, and thus it is desirable to remove the oxide film 6 as much as possible. Therefore, in the present embodiment, a step of immersing the powder raw material particles 5 shown in Fig. 1(a) in a solution of a rust removing agent to remove the oxide film 6 may be performed.

In a case where the powder raw material particles 5 are immersed in a solution of a rust removing agent, a solvent such as water can be added to appropriately dilute and use the solution of the rust removing agent. In addition, in immersing in the solution of the rust removing agent, stirring or the like may be performed to promote the rust removing effect. For stirring, an ultrasonic washer or a stirrer having a rotary blade can be used.

After immersion in the solution of the rust removing agent, the surfaces of the powder raw material particles 5 may be washed using a washing liquid such as pure water or tap water. If the surfaces of the powder raw material particles 5 are subjected to derusting with a rust removing agent and the possibility of reoxidation by washing with pure water or tap water is low, the rust removing agent can be removed by washing with pure water or tap water. If the effect of removing the oxide film 6 with the rust removing agent is sufficient, it is considered that reoxidation does not easily occur even in a case washing is performed after derusting.

When the oxide film 6 is removed, it is desirable to remove the oxide film 6 from the entire outer surface of the powder raw material particle 5. However, if the film is sufficiently thin or the residual area is small, a part of the oxide film 6 may remain on the surface of the powder particle body 2.

As the rust removing agent, a solution containing an organic acid such as a citric acid, an acidic solvent such as a phosphoric acid, a basic solvent (alkali) such as sodium hydroxide, or the like can be used.

As an example of the rust removing agent, a composition in which 2.5 to 10 mass% of a citric acid, 2.5 to 10 mass% of propylene glycol monobutyl ether, and 2.5 to 10 mass% of a phosphoric acid are contained as main components and 2.5 mass or less of a phosphonic acid and 2.5 mass or less of mineral spirits (aliphatic hydrocarbon) are added can be employed.

Specifically, a rust removing agent (trade name: BF4-26L/G) manufactured by Tanimura Corporation or the like can be used as an example of amine-based carboxylate.

For example, it is possible to employ a condition in which 80 to 100 cc of a rust removing agent (phosphoric acid-based) containing the amine-based carboxylate described above is mixed with 150 g of the powder raw material particles 5 and the mixture is put into a container and stirred for 60 minutes. The powder precipitating in the solution is rinsed with a necessary and sufficient amount of pure water or the like and can be sent to the next step.

[Antirust Agent]

After removal of the oxide film 6 of the powder raw material particle 5 as shown in Fig. 1(b), a step of immersing the powder raw material particles 5 in a solution of an antirust agent to form the barrier layer 3 on the surfaces of the powder raw material particles 5 is performed.

In this case, while the powder raw material particles 5 are accommodated in the container, pure water can be added thereto to repeatedly perform rinsing a necessary number of times, and then the following antirust agent can be put into the container to perform an immersion treatment with the following antirust agent.

In a case where the powder raw material particles 5 are immersed in a solution of an antirust agent, a solvent such as water can be added to appropriately dilute and use the solution of the antirust agent. In addition, in immersing in the solution of the antirust agent, stirring or the like may be performed to promote the coating with the barrier layer 3. After immersion in the solution of the antirust agent, the surfaces of the powder raw material particles 5 may be washed using a washing liquid such as tap water.

To immerse the powder raw material particles 5 in the solution of the antirust agent after derusting, after immersion of the aluminum powder product 1 in the solution containing the rust removing agent and rinsing of the powder raw material particles 5 by adding pure water to the solution, the antirust agent can be further added to the same solution and an antirust treatment can be performed in the same solution. However, the container may be replaced to form the barrier layer 3.

As the antirust agent, an aqueous solution of a volatile antirust agent consisting of one of amine-based nitrites, amine-based carboxylates, amine-based chromates, carboxylic acid esters, and heterocyclic compounds or a mixture thereof can be used. In addition, an organic solvent containing these salts, esters, and compounds may be used.

As an example of the amine-based carboxylate, an aqueous solution in which 2.5 to 10 mass% of potassium hydrogen phthalate is contained as a main component and 2.5 mass% or less of a cyclocarboxylic acid, 2.5 mass% or less of disodium metasilicate, and 2.5 mass% or less of trisodium phosphate are added can be employed. In addition, a solution of a surfactant containing a carboxylate can be applied.

Specifically, a rust removing agent, trade name: BF4-16 manufactured by Tanimura Corporation, can be used as an example of the amine-based carboxylate.

As the antirust agent, trade name: MECHAHIBITOR #325, manufactured by Nippon Mecha Chemical Co. Ltd., can be used, and as the component for the antirust effect, an inhibitor, chelating agent, water-soluble antirust agent, or volatile antirust agent containing an amine-based carboxylic acid can be used.

If the powder raw material particles 5 are taken out from the solution after being immersed in the solution of the antirust agent, the aluminum powder product 1 including the barrier layer 3 shown in Fig. 1(c) can be obtained.

After immersion in the solution of the antirust agent, the surfaces of the powder raw material particles 5 may be washed using a washing liquid such as pure water or tap water. In a case where the barrier layer 3 is formed on the surface of the powder raw material particle 5 with the antirust agent, washing with pure water, tap water, or the like can be performed. In a case where the formation of the barrier layer 3 with the antirust agent is sufficient, it is considered that the barrier layer 3 is not easily peeled off even if washing is performed after the derusting treatment.

The aluminum powder product 1 including the barrier layer 3 is retrieved from the solution and dried in an atmosphere such as air. This drying treatment can be performed in an atmosphere at room temperature to 70°C. For example, it can be performed in the air at 45°C.

The aluminum powder product 1 with a barrier layer aimed at in the present invention can be obtained through the above-described steps. It is desirable that the barrier layer 3 cover the entire outer surface of the powder particle body 2, but the barrier layer 3 may be in a state of being attached to the majority of the outer surface without completely covering the entire outer surface.

A predetermined amount of the dried aluminum powder product 1 with a barrier layer is retrieved, and when the following test is completed after holding at 80°C for 12 hours, an aluminum powder can be obtained in which no aluminum hydroxide phase is formed on the surface and the oxygen content therein is 0.5 mass% or less.

Since the above-described aluminum powder product 1 has sufficient corrosion resistance to water, the aluminum powder product 1 can be suitably used for metal additive manufacturing by a binder jet method described later using a binder containing water.

In the particle-assembled powder of the aluminum powder product 1, in a case where the volume-based 50%-cumulative particle diameter is adjusted to 10 $\mu$m or more and 50 $\mu$m or less, it is possible to obtain a particle-assembled powder of the aluminum powder product 1 having stable flowability and desired sinterability.

In a case where the volume-based 50%-cumulative particle diameter is 10 $\mu$m or less, there is a risk of a dust explosion due to a decrease in flowability and scattering of the powder. In a case where the volume-based 50%-cumulative particle diameter is 50 $\mu$m or more, the specific surface area of the particles decreases. Therefore, the sinterability is degraded in sintering described later, and it is not possible to reach a sufficient density of a sintered body.

In addition, regarding the particle-assembled powder of the aluminum powder product 1, Y = (D90 - D10)/D50, that is calculated from a volume-based 10%-cumulative particle diameter (D10), a volume-based 50%-cumulative particle diameter (D50), and a volume-based 90%-cumulative particle diameter (D90), is preferably in a range of 0.5 < Y < 2.0.

In a case where the particle-assembled powder of the aluminum powder product 1 satisfies the above-described condition, the bulk density of the aluminum powder layer can be stably kept at a high level in an additively manufactured green body of the aluminum powder products 1.

In a case where Y is 0.5 or less, the particle size distribution range of the aluminum powder is extremely narrow. Therefore, the powder has excellent stability, but gaps between particles increase and it becomes difficult to obtain a high bulk density.

In a case where Y is 2.0 or more, there is a merit in that small particles enter between large particles of the aluminum powder, and thus a high bulk density can be easily obtained. However, there is a concern that ununiformities may be caused in density in an additive manufactured article due to problems such as scattering of fine particles and low sinterability of large particles of the aluminum powder.

[Method for Producing Aluminum Sintered Body]

To produce an aluminum sintered body (additive manufactured article) using the above-described aluminum powder product 1 with a barrier layer, a method in which an particle-assembled powder of the aluminum powder product 1 is used as a feedstock powder (powder for metal additive manufacturing) and fills a mold having a predetermined shape, a method in which selectively depositing a binder containing a thermosetting resin, a thermoplastic resin, or a photocurable resin onto a layer of feedstock powder and repeatedly stacking such powder layers, or the like can be used.

When a particular geometry should be obtained by additive manufacturing using the aluminum powder product 1, that geometry can be achieved by selectively depositing binder onto a layer of the feedstock powder and sequentially stacking the powder layers. Due to the repeated stacking, the feedstock powder is bound to be the desired three-dimensional shape. After the feedstock powder is bound, the removal of unnecessary powder or degreasing is performed as necessary to obtain, for example, a cube-shaped green body 11 shown in Fig. 2(a).

When the green body 11 is obtained, the green body 11 is accommodated in a heating furnace 12 as shown in Fig. 2(b), and sintered by being heated at a temperature of about 560°C to 650°C for a necessary time in a vacuum atmosphere without pressure, a reducing atmosphere, an inert gas, or a gas flow atmosphere using a reducing gas or an inert gas under reduced pressure.

By heating to a temperature in the above range, a liquid phase is generated from the aluminum powder or the aluminum alloy powder, and wet-spreads to fill the gaps between the particles of the feedstock powder, so that isotropic shrinkage can occur to reach high sintered density.

In that case, regarding the heating rate, it is desirable that, in order to suppress the rapid generation of the liquid phase, heating be performed at the heating rate of 10 °C/min or less in a temperature range of 500°C or higher at which the generation of the liquid phase starts.

In addition, in order to further stabilize the wetting and spreading of the liquid phase, a heating step may be carried out in two or more stages with the object of accelerating solid phase sintering by holding the temperature at or below the temperature at which the liquid phase is generated and of stabilizing the gaps between the particles.

Pure aluminum has a melting point of about 660°C. In addition, when eutectic alloy elements (one or more selected from Ca, Cu, Fe, Mg, Mn, Ni, Si, and Zn) are added to pure aluminum, an aluminum alloy powder having a melting point lower than the melting point of the pure aluminum of about 660°C is obtained. In addition, the ratio at which the melting point falls below the melting point of the pure aluminum varies depending on the amount of the eutectic elements to be added to the aluminum and varies depending on the kinds of the eutectic elements to be added.

In a case where an aluminum powder is formed from a pure aluminum powder, a liquid phase is generated at a boundary portion between the aluminum powder particles when the aluminum powder is heated to a temperature near the melting point described above, and the aluminum powder particles are integrated via the liquid phase.

In a case where an aluminum powder is formed from an aluminum alloy powder, a liquid phase is generated at a boundary portion between the aluminum powder particles when the aluminum powder is heated to a temperature slightly lower than the melting point described above near the melting point of the corresponding aluminum alloy, and the aluminum powder particles are integrated via the liquid phase.

Alternatively, in a case where a mixed powder of a pure aluminum powder and an aluminum alloy powder is used as an aluminum powder, a liquid phase is generated at a boundary portion between the aluminum powder particles when the aluminum powder is heated to a temperature near the melting point of the corresponding aluminum alloy, and the aluminum powder particles are integrated via the liquid phase.

For example, in a composition system in which the above-described eutectic elements are added and the melting point is lowered, in a case where an aluminum alloy powder having a melting point in a lower temperature range than 660°C, that is the melting point of the pure aluminum powder, for example, in a range of 560°C to 640°C is used, the aluminum alloy powder can be sintered by being heated to a lower temperature.

The melting point of the pure aluminum powder is about 660°C, and the entire pure aluminum powder does not completely melt in the temperature range described above. However, since some of the portions where the liquid phase has wet-spread, that are portions of the interface between the pure aluminum powder particles, melt and fuse with each other, a dense sintered body 17, that is almost entirely melted and integrated, can be finally obtained when cooling is carried out after heating for a predetermined time.

In addition, when an aluminum powder consisting of an aluminum alloy powder in which the above-described eutectic elements are contained and the melting point is thus lowered is used, fusion due to mutual melting occurs at the interface between the powder particles by heating to a temperature range lower than 660°C, and the sintered body 17 can be obtained.

Fig. 2(c) shows a state in which the sintered body 17 is produced in the heating furnace 12.

The obtained sintered body 17 can be finished by being processed or surface-polished with a cutting tool 18 as needed as shown in Fig. 2(d), to obtain a product sintered body (additive manufactured article) 19.

In a case where the sintered body 17 includes both a pure aluminum powder and an aluminum alloy powder, a liquid phase is likely to be generated from the aluminum alloy powder with a lower melting point. The liquid phase wet-spreads to gaps between the pure aluminum powder and the aluminum alloy powder.

The sintered body 17 or the product sintered body 19 is produced by sintering at least one of a pure aluminum powder and an aluminum alloy powder, and thus has a dense structure in which the gap between the pure aluminum powder particles or the gap between the aluminum alloy powder particles is effectively filled with a liquid phase generated from the pure aluminum powder or the aluminum alloy powder. Therefore, a strong metal bond associated with the diffusion of the metal between the particles is obtained even between the powders, and a sufficient conduction path is obtained. Accordingly, it is possible to obtain high thermal conduction properties and electrical conduction properties.

Therefore, it is possible to obtain a sintered body 17 or a product sintered body 19 having a high density and a shape that is close to a target shape and well-regulated. For example, it is possible to obtain a sintered body 17 or a product sintered body 19 having a relative density of 85% or more and a thermal conductivity of 180 W/mK or more by using a pure aluminum powder.

With the above-described sintered body 17 or product sintered body 19, it is possible to realize a high density and obtain high electrical conduction properties and thermal conduction properties.

Due to the reasons, for example, it is possible to further improve the performance of heat exchange materials, conductive materials, and high-strength materials prepared by using the particle-assembled powder of the aluminum powder product 1 described above.

EXAMPLES

A pure aluminum base material (JIS1050) was put into a melting furnace to prepare molten pure aluminum, and from the molten metal, pure aluminum powders used in Example No. 1 and Comparative Example No. 1 in Table 1 were prepared by an inert gas atomization method. Similarly, an aluminum alloy having a target composition was charged into a melting furnace to create a molten aluminum alloy, and from the molten metal, aluminum alloy powders of Examples No. 2 to No. 14 in Table 1 were prepared by an inert gas atomization method.

In addition, a pure aluminum base material (JIS1050) was put into a melting furnace to prepare molten pure aluminum as in Example 1, and from the molten metal, a pure aluminum powder of Comparative Example No. 2 in Table 1 was prepared by an air gas atomization method.

A1100 shown in Table 1 has a composition of (Fe: 0.1%, Si: 0.5%, Cu: 0.1%, Mn: 0.01%, Zn: 0.01%, and a remainder: inevitable impurities and Al).

A2024 shown in Table 1 has a composition of (Si: 0.3%, Fe: 0.1%, Cu: 4.0%, Mn: 0.5%, Mg: 1.3%, Cr: 0.05%, Zn: 0.01%, and a remainder: inevitable impurities and Al).

A3003 shown in Table 1 has a composition of (Si: 0.5%, Fe: 0.1%, Cu: 0.1%, Mn: 1.1%, Zn: 0.01%, and a remainder: inevitable impurities and Al).

A6061 shown in Table 1 has a composition of (Si: 0.5%, Fe: 0.1%, Cu: 0.2%, Mn: 0.01%, Mg: 0.9%, Cr: 0.1%, Zn: 0.01%, Ti: 0.05%, and a remainder: inevitable impurities and Al).

A7075 shown in Table 1 has a composition of (Si: 0.2%, Fe: 0.1%, Cu: 1.5%, Mn: 0.05%, Mg: 2.2%, Cr: 0.2%, Zn: 5.3%, Ti: 0.05%, and a remainder: inevitable impurities and Al).

For the obtained aluminum powders, coarse powders and fine powders formed of fume and the like were removed by sieving and washing, and then subjected to sieving according to a target particle size as necessary.

Each of the aluminum powders of Examples and Comparative Examples was subjected to a derusting treatment and an antirust treatment according to the following procedure.

150 g of an aluminum powder product and 80 to 100 cc of a rust removing agent (twice-diluted BF4-26L: trade name, Tanimura Corporation) were put into a 1 L container and stirred. An ultrasonic washer or a stirrer having a rotary blade was used for the stirring, and the stirring was performed at room temperature for 60 minutes.

The reaction (foaming) starts after about 25 minutes since the start of the stirring. Thus, the stirring was stopped after 60 minutes, and the stirred material was left for 10 minutes to precipitate the powder in the solution. The supernatant liquid was discharged from the container so that the powder did not flow out.

Next, 400 cc of pure water was put into the container, and a rinsing treatment was performed for stirring to the extent that the precipitated powder was dispersed. After stirring, the stirred material was left for 10 minutes to precipitate the powder in the solution. The supernatant liquid in the container was discharged so that the powder did not flow out.

Next, 150 cc of an antirust agent (triple-diluted BF4-16: trade name, Tanimura Corporation) was put into the container and stirred to the extent that the precipitated powder was dispersed. The stirred material was left for 10 minutes to precipitate the powder in the container. The supernatant in the container was discharged so that the powder did not flow out.

Thereafter, the step of performing rinsing with pure water was repeated twice.

The particle-assembled powder remaining in the container was poured into an aluminum vat, and the dumpling-like powder was loosened with a spoon. The particle-assembled powder was dried in a blow dryer at 45°C, and the dried powder was retrieved and stored in a container together with silica gel. The amount of the antirust agent attached and remaining on the aluminum powder product is very small and is difficult to be measure. However, it is presumed to be about 0.0001 to 0.01 mass% of the total amount of the aluminum powder product.

Each of the aluminum powders shown in Table 1 below was used as feedstock powders to be a shape of length 10 mm × width 10 mm × thickness 10 mm using a metal binder jet type additive manufacturing apparatus (DM-P2500 manufactured by Digital Metal) with the use of an aqueous binder.

Thereafter, the additively-manufactured article was subjected to resin curing and degreasing by heating in an inert atmosphere or an air atmosphere, and then the obtained degreased body was heated for 120 minutes in a vacuum atmosphere or an inert atmosphere to prepare an aluminum sintered body.

The sinterability was evaluated with a relative density (additively-manufactured article density) of the obtained aluminum sintered body that had been reached, and the hydrogen generation amount and the particle diameter in the aluminum powder used for the preparation of each sintered body were measured.

Measurement conditions for the hydrogen generation amount, measurement conditions for the particle diameter, and measurement conditions for the molded article density are as follows.

[Hot Water Resistance Test and Method for Confirming Aluminum Hydroxide Phase]

For the evaluation of durability against hot water, pure water having an electric conductivity of 0.1 $\mu$S/cm or less was kept in a glass container at 20°C, and vacuuming was performed for 60 minutes using a rotary pump to remove a dissolved gas from the pure water. The pure water was injected into a flask, and while the water was held at 20°C, the aluminum powder sample was put thereinto. Then, they were held in a constant-temperature oven at 80°C for 12 hours. After holding for 12 hours, the aluminum powder was retrieved from the pure water and dried. Then, the presence or absence of an aluminum hydroxide phase was measured by powder X-ray diffraction.

The measurement by powder X-ray diffraction was performed under the conditions below: X-ray tube: Cu, tube voltage: 40 kV, tube current: 40 mA, scanning range ($2\theta$): 5° to 80°, and scanning speed: 5°/min using Rigaku Ultima IV.

From the obtained X-ray diffraction peak pattern, the presence or absence of the generation of an aluminum hydroxide phase due to the reaction with hot water was judged by the presence or absence of a main peak of the aluminum hydroxide phase shown at $2\theta$ (°) of 18.52°, 20.30°, 27.77°, 40.48°, and 53.02°.

[Particle Diameter]

A particle diameter distribution was measured by a wet laser diffraction/scattering method using trade name: MT3300EXII manufactured by MicrotracBEL Corp., and from the obtained result, a volume-based 10%-cumulative particle diameter, a volume-based 50%-cumulative particle diameter, and a volume-based 90%-cumulative particle diameter were calculated.

[Molded Article Density]

The bulk density of the obtained additively-manufactured article was measured according to (JIS Z 8807: methods of measuring density and specific gravity of solid), and the true density of the additively-manufactured article was measured by a pycnometer method. From the obtained bulk density and true density, the relative density (= bulk density/true density) of the additively-manufactured article was calculated. The measurement results are collectively shown in Table 1 below.

[Oxygen Concentration]

An oxygen concentration of the entire aluminum powder particles was measured using an inert gas melting-infrared absorption method using an oxygen analyzer, trade name: ON736 manufactured by LECO Corporation.

TABLE 1

| | No | Composition of Aluminum Powder Alloy | Volatile Antirust Agent Coating Treatment | Oxygen Concentration (mass%) | Presence or Absence of Aluminum Hydroxide Phase Using Powder X-Ray Diffraction | D50 (μm) | (D90-D10)/-D50 | Relative Density of Sintered Body (%) |
|---|---|---|---|---|---|---|---|---|
| Examples | 1 | A1050 | Presence | 0.24 | Not Detected | 35 | 1.2 | 91 |
| | 2 | A1100 | Presence | 0.25 | Not Detected | 15 | 1.1 | 93 |
| | 3 | A2024 | Presence | 0.37 | Not Detected | 22 | 0.9 | 90 |
| | 4 | A3003 | Presence | 0.31 | Not Detected | 28 | 0.9 | 94 |
| | 5 | A6061 | Presence | 0.36 | Not Detected | 25 | 1.0 | 94 |
| | 6 | A7075 | Presence | 0.37 | Not Detected | 23 | 1.1 | 91 |
| | 7 | Al-10mass%Si-0.5mass%Mg | Presence | 0.26 | Not Detected | 32 | 0.9 | 94 |
| | 8 | Al-7mass % Si-0.6mass%Mg | Presence | 0.23 | Not Detected | 35 | 0.9 | 94 |
| | 9 | Al-3mass % Si | Presence | 0.38 | Not Detected | 52 | 1.0 | 86 |
| | 10 | Al-3mass % Si-0.5mass%Mg | Presence | 0.22 | Not Detected | 38 | 1.0 | 90 |
| | 11 | A1100 | Presence | 0.41 | Not Detected | 21 | 1.0 | 90 |
| | 12 | A1100 | Presence | 0.39 | Not Detected | 20 | 1.0 | 93 |
| | 13 | A1100 | Presence | 0.28 | Not Detected | 31 | 1.2 | 96 |
| | 14 | A1100 | Presence | 0.49 | Not Detected | 37 | 1.2 | 88 |
| Comparative Examples | 1 | A1050 | Absence | 0.24 | Aluminum Hydroxide Phase is Present | 35 | 1.2 | 72 |
| | 2 | A1050 | Presence | 0.55 | Not Detected | 35 | 1.2 | 77 |

The samples of Examples 1 to 14 are examples in which the composition of the aluminum powder to be used is changed.

In any of the samples of Examples 1 to 14, the sample subjected to the removal of the oxide film with the rust removing agent and the barrier layer coating with the antirust agent had a low oxygen concentration, and was a sample from which a peak derived from an aluminum hydroxide phase was not observed by powder X-ray diffraction.

In a case where sintered bodies were produced by using the aluminum powders of Examples 1 to 14, any sintered body showed an excellent value of relative density of 85% or more.

The aluminum powders of Examples 1 to 14 had a low oxygen concentration of 0.23 to 0.41 mass% and also showed a low value of integrated hydrogen generation amount of 20 to 37.

In contrast to Examples, in Comparative Example 1, the sample was not subjected to the antirust agent coating treatment. Although the oxygen concentration was low, the aluminum hydroxide phase was observed as a result of the reaction with water, resulting in a decrease in relative density of the sintered body.

The aluminum powder not subjected to the volatile antirust agent coating treatment of Comparative Example 1 was confirmed to easily react with water, and could not obtain a sufficient density as a sintered body even in the binder jet type additive manufacturing test using an aqueous binder. The reason for this is presumed to be that the aluminum hydroxide generated by reaction with the moisture contained in the binder degrades the sinterability.

In Comparative Example 2, the sample prepared by oxidizing the A1050 powder in advance in the air at 500°C had a high oxygen concentration, and the relative density of the sintered body was decreased since the sample had an oxide film. The powder having a high oxygen concentration in Comparative Example 2 does not exhibit reactivity with water, and the reason for this is assumed to be due to the thick oxide film formed on the surface. Meanwhile, due to the influence of the thick oxide film, it was not possible to obtain a sufficient density of a sintered body in the same binder jet type additive manufacturing test.

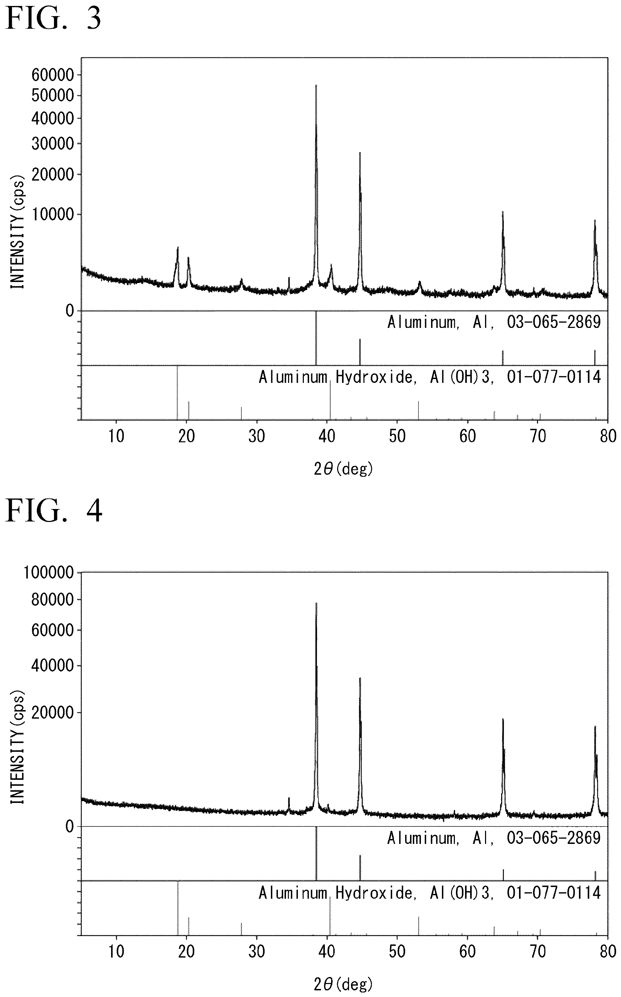

Fig. 3 shows an XRD measurement result of the aluminum powder of Comparative Example 1 after holding for 12 hours in pure water at 80°C, and Fig. 4 shows an XRD measurement result of the aluminum powder of Example 1 after holding for 12 hours in pure water at 80°C.

From the comparison between the XRD measurement result shown in Fig. 3 and the XRD measurement result shown in Fig. 4, no special peak was shown at $2\theta$ = 18.52°, 20.30°, 27.77°, 40.48°, and 53.02° in Example 1, but in Comparative Example 1, a peak was shown at $2\theta$ = 18.52°, 20.30°, 27.77°, 40.48°, and 53.02°.

Therefore, the following interpretation can be made: in Example 1, no aluminum hydroxide phase is generated on the surface of the powder, whereas the aluminum hydroxide phase is generated on the surface of the powder in Comparative Example 1.

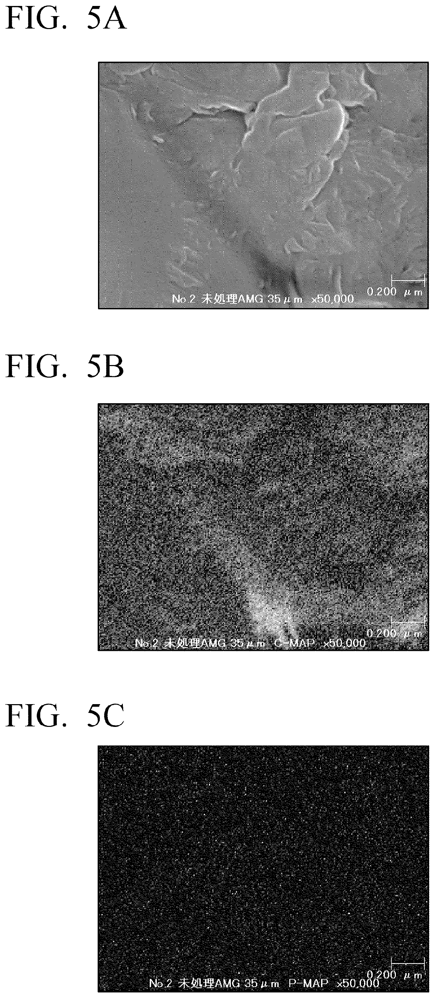

Figs. 5A to 5C show the results of analysis on the surface of the aluminum powder of Comparative Example 1 by Auger electron spectroscopy (AES), in which Fig. 5A shows an enlarged image (50,000×) of the surface of the aluminum powder, Fig. 5B is a view showing the distribution of carbon in the image range shown in Fig. 5A, and Fig. 5C is a view showing the distribution of phosphorus in the image range shown in Fig. 5A.

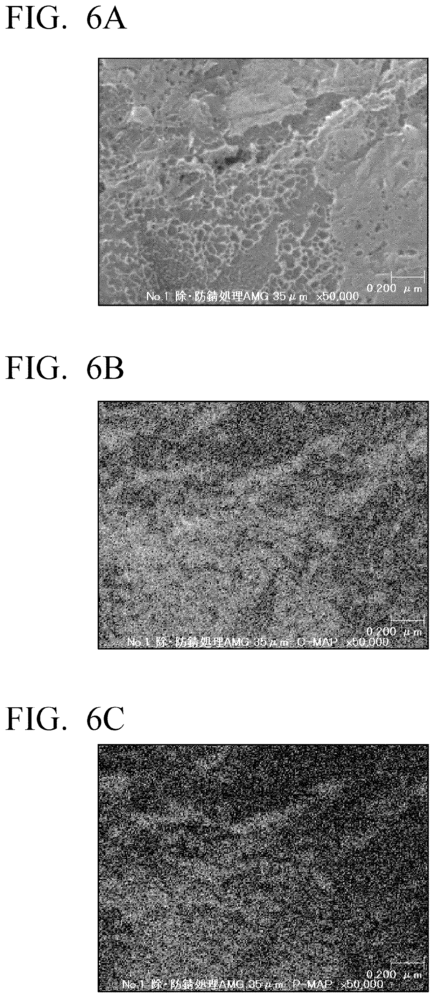

Figs. 6A to 6C show the results of analysis on the surface of the aluminum powder of Example 1 by Auger electron spectroscopy (AES), in which Fig. 6A shows an enlarged image (50,000×) of the surface of the aluminum powder, Fig. 6B is a view showing the distribution of carbon in the image range shown in Fig. 6A, and Fig. 6C is a view showing the distribution of phosphorus in the image range shown in Fig. 6A.

From the comparisons shown in Figs. 5A to 5C and Figs. 6A to 6C, it is found that the aluminum powder of Example 1 has a large number of nano-level recesses and protrusions formed on the surface thereof, and the carbon and phosphorus are distributed more in the large number of recesses than in the protrusions and flat portions.

From the comparisons shown in Figs. 5A to 5C and Figs. 6A to 6C, a result was obtained in which, in Example 1, a large amount of carbon and phosphorus were distributed on the powder surface, and it was possible to assume the presence of the barrier phase.

INDUSTRIAL APPLICABILITY

According to the aluminum powder product according to the present invention, it is possible to promote sintering between particles as compared to conventional aluminum powders. Therefore, in a case where an aluminum additive manufactured article is produced using the aluminum powder product, it is possible to increase the density of the aluminum additive manufactured article to be obtained and achieve high electrical conduction properties and high thermal conduction properties. Therefore, for example, it is possible to further improve the performance of heat exchange materials, conductive materials, and high-strength materials prepared by using the aluminum powder product, and thus the present invention is industrially usable.

REFERENCE SIGNS LIST

1: Aluminum powder product
2: Powder particle body
3: Barrier layer
5: Powder raw material particle
6: Oxide film
11: Green body
12: Heating furnace
17: Sintered body
19: Product sintered body (additive manufactured article)

**Claims**

1. An aluminum powder product comprising:

   powder particle bodies made of aluminum or an aluminum alloy; and
   barrier layers formed on surfaces of the powder particle bodies,
   wherein an oxygen content in the aluminum powder product is 0.5 mass% or less, and
   when a test, in which a mixture obtained by mixing the aluminum powder product and pure water at a mass ratio of 1:100 is held at 80°C for 12 hours, is performed, no aluminum hydroxide phase is formed on a surface of the aluminum powder product after the test.

2. The aluminum powder product according to Claim 1,
   wherein a volume-based 50%-cumulative particle diameter measured by a laser diffraction/scattering method is 10 $\mu$m or more and 50 $\mu$m or less.

3. The aluminum powder product according to Claim 1 or 2,
   wherein Y = (D90 - D10)/D50, that is calculated from a volume-based 10%-cumulative particle diameter (D10), a volume-based 50%-cumulative particle diameter (D50), and a volume-based 90%-cumulative particle diameter (D90), measured by a laser diffraction/scattering method, is in a range of 0.5 < Y < 2.0.

4. The aluminum powder product according to any one of Claims 1 to 3,
   wherein the barrier layer is a barrier layer formed of a volatile antirust agent consisting of one of amine-based nitrites, amine-based carboxylates, amine-based chromates, carboxylic acid esters, and heterocyclic compounds or a mixture thereof.

5. The aluminum powder product according to any one of Claims 1 to 4,
   wherein the aluminum powder product is a powder for metal additive manufacturing.

6. A method for producing an aluminum powder product, the method comprising:

   a step of immersing an aluminum powder raw material made of aluminum or an aluminum alloy in a solution obtained by dissolving a volatile antirust agent in water, an organic solvent, or a solvent obtained by mixing the water and the organic solvent; and
   a step of drying the aluminum powder after the immersion,
   wherein in the aluminum powder product obtained by the drying step,

      an oxygen content in the aluminum powder product is 0.5 mass% or less, and
      in a case where a test, in which a mixture obtained by mixing the aluminum powder product and pure water at a mass ratio of 1:100 is held at 80°C for 12 hours, is performed, no aluminum hydroxide phase is formed on a surface of the aluminum powder product after the test.

7. The method for producing an aluminum powder product according to Claim 6,

wherein the method is a method for producing the aluminum powder product, and

after a step of immersing the aluminum powder raw material in a liquid containing an acid or an alkali to remove an oxide film on a surface of the aluminum powder raw material, a step of immersing the aluminum powder raw material, from which the oxide film is removed, in the solution in which the volatile antirust agent is dissolved is performed.

8. The method for producing an aluminum powder product according to Claim 6,

wherein the method is a method for producing the aluminum powder product, and

in the step of immersing the aluminum powder raw material, from which the oxide film is removed, in the solution in which the volatile antirust agent is dissolved, removing the oxide film with an acid or an alkali is performed in the solution.

9. The method for producing an aluminum powder product according to any one of Claims 6 to 8, wherein the aluminum powder product is a powder for metal additive manufacturing.

10. An additive manufactured article comprising:
a sintered body obtained by sintering the aluminum powder product according to any one of Claims 1 to 5.

# FIG. 1

(A)

(B)

(C)

# FIG. 2

(A)

(B)

(C)

(D)

## FIG. 3

## FIG. 4

## FIG. 5A

## FIG. 5B

## FIG. 5C

## FIG. 6A

## FIG. 6B

## FIG. 6C

EP 4 464 438 A1

# INTERNATIONAL SEARCH REPORT

| International application No. |
| --- |
| **PCT/JP2023/000589** |

**A. CLASSIFICATION OF SUBJECT MATTER**

*B22F 1/00*(2022.01)i; *B22F 1/052*(2022.01)i; *B22F 1/102*(2022.01)i; *B22F 10/34*(2021.01)i; *B33Y 70/00*(2020.01)i; *B33Y 80/00*(2015.01)i; *C22C 21/00*(2006.01)i
FI:    B22F1/00 N; B22F1/052; B22F1/102; B22F10/34; C22C21/00 J; B33Y70/00; B33Y80/00

According to International Patent Classification (IPC) or to both national classification and IPC

**B. FIELDS SEARCHED**

Minimum documentation searched (classification system followed by classification symbols)
    B22F1/00; B22F1/052; B22F1/102; B22F10/34; B33Y70/00; B33Y80/00; C22C21/00

Documentation searched other than minimum documentation to the extent that such documents are included in the fields searched
    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-42420 A (SEIKO EPSON CORP.) 18 March 2021 (2021-03-18)<br>claims, paragraphs [0053], [0076] | 1-10 |
| A | JP 2018-129409 A (NATIONAL INST. OF ADVANCED INDUSTRIAL SCIENCE AND TECHNOLOGY) 16 August 2018 (2018-08-16)<br>claims, paragraphs [0022], [0025], [0029] | 1-10 |
| A | JP 2017-110294 A (CANON INC.) 22 June 2017 (2017-06-22)<br>claims, paragraphs [0061]-[0066] | 1-10 |
| A | JP 2000-160371 A (CHUBU KIRESUTO KK) 13 June 2000 (2000-06-13)<br>claims | 1-10 |

☐ Further documents are listed in the continuation of Box C.    ☑ See patent family annex.

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **09 March 2023** | **20 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/000589**

| Patent document cited in search report | | | Publication date (day/month/year) | Patent family member(s) | Publication date (day/month/year) |
|---|---|---|---|---|---|
| JP | 2021-42420 | A | 18 March 2021 | US 2021/0069785 A1<br>paragraphs [0065], [0088], claims<br>CN 112548088 A | |
| JP | 2018-129409 | A | 16 August 2018 | (Family: none) | |
| JP | 2017-110294 | A | 22 June 2017 | US 2017/0165791 A1<br>paragraphs [0078]-[0090], claims<br>US 2020/0001399 A1<br>EP 3178585 A1<br>CN 106862562 A<br>KR 10-2017-0069155 A<br>TW 201720549 A | |
| JP | 2000-160371 | A | 13 June 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022004512 A
- JP H01294833 A
- JP 2013524006 W
- JP 2004308004 A
- JP 2020511593 W